# EUROPEAN PATENT APPLICATION

(11) **EP 2 587 389 A1**
(43) Date of publication of application: **01.05.2013**
(21) Application number: 11290501.3
(22) Date of filing: 28.10.2011
(51) Int. Cl.: G06F 17/28, G06F 17/30, G06K 9/32

(54) **A system and method for generating translated touristic information**

(71) Applicant: Alcatel Lucent, 75007 Paris (FR)
(72) Inventor: Wu,Tingyao, 3001 Heverlee (BE); Lou, Zhe, 2640 Mortsel (BE)
(74) Representative: IP Hills NV

(57) **Abstract**

A system for generating touristic information for a user, the user having a first language:
- generates an image or video;
- processes the image or video to thereby produce a text image;
- generates a text message (131) from the text image through OCR, the text message (131) having a second language different from the first language;
- automatically searches touristic information in the second language related to the text message (131);
- automatically translates the touristic information from the second language to the first language to thereby generate translated touristic information; and
- provides the translated touristic information (134) in the first language to the user.

## Description

### Field of the Invention

The present invention generally relates to generating touristic information, e.g. information on restaurants, landmarks, events, street guidance, etc. to tourists traveling e.g. overseas in a foreign country with language(s) different from the tourist's language(s). The invention in particular aims at providing more meaningful and structural information to tourists, in a language understandable for the tourists.

### Background of the Invention

A tourist having a first language and traveling in a foreign country, typically experiences difficulties in reading and understanding the text written in the local language of the foreign country, assuming this is a second language different from the first language. As a result the name of a restaurant, the menu of a restaurant, ingredients of a dish, information about a landmark or event displayed on billboards, route guidance information, etc., are not meaningful to the foreign tourist.

Existing solutions for the foreign tourist consist in either soliciting an accompanying translator/interpreter, looking-up text in a dictionary, or using an automatic translation system via a mobile device with wireless Internet connectivity. The existing solutions are disadvantageous in various aspects as will be explained in the following paragraphs.

Hiring a translator/interpreter is costly and usually only affordable when the tourist travels in group.

Looking up information in a dictionary is rather inconvenient. It requires the tourist to drag a dictionary and the tourist must know how the dictionary in the foreign language is structured in order to be able to look up inquiry text. In case the tourist has a digital dictionary, he/she must know how to enter characters of the foreign language in order to perform a successful lookup. A further disadvantage of dictionary lookup is that dictionaries are limited to provide a translation of the word or phrase, eventually a brief explanation thereof, but definitely not extensive, meaningful touristic information.

An automatic translation system accessible from a mobile device with Internet connectivity, e.g. Google Translation, is rather inexpensive and handy. Although it seems to resolve most problems related to human translators/interpreters or paper/digital dictionaries, it still requires the tourist to enter characters in the foreign language. An American traveller in China hence needs to know how to enter Chinese characters into his mobile device in order to get a translation. Furthermore, the online translator typically translates literally from the source language into the destination language, leaving the tourist with meaningless information. For instance, literally translating a Chinese menu into English may not tell the tourist what ingredients are used in the different dishes.

It is an objective of the present invention to present a system and method for generating touristic information that resolves the above mentioned shortcomings of existing solutions. More particularly, it is an objective to disclose a system and method that automatically provides a tourist with meaningful and structural information in relation to inquiry text in a foreign language. It is a further objective to disclose a system and method that is cost-efficient, does not require consulting human translators or dictionaries and releases the tourist from the burden of entering inquiry text in a foreign language and/or foreign alphabet.

### Summary of the Invention

According to the present invention, the above defined objective is realised by a system for generating touristic information for a user, the user having a first language, the system being defined by claim 1 and comprising:
- image or video generation means enabling the user to generate an image or video;
- image processing means for processing the image or video to thereby produce a text image;
- optical character recognition means adapted to generate a text message from the text image, the text message having a second language different from the first language;
- automated search means for automatically searching touristic information in the second language related to the text message;
- automated translation means for automatically translating the touristic information from the second language to the first language to thereby generate translated touristic information; and
- tourism assistance means for providing the translated touristic information in the first language to the user.

Thus, the invention consists in an automated translation system based on optical character recognition on a still image (picture) or moving image (video) taken by the tourist using for instance his mobile device, e.g. his smartphone or tablet PC. The system searches meaningful touristic information in the second language, i.e. the foreign language of the visited country. This meaningful information is then automatically translated to the first language, e.g. the tourist's mother tongue, and delivered to the tourist's mobile device for display. Since the inquiry text is obtained as a result of OCR on a picture or video, the tourist does not need to enter text in a foreign language/alphabet. Further, the inquiry text is not translated but used as search key for searching related meaningful information in the second language. The information collected this way will be more meaningful, less noisy and better structured than information collected using the translated inquiry text. Since the information is automatically translated using an automated translator, the tourist is provided with more meaningful, better structured tourist info in his own language.

As defined by claim 2, the image processing means in the system for generating touristic information according to the current invention, may comprise segmentation means adapted to segment the image or video and to select a segment of the image or video containing the text message.

In other words, the still or moving image captured by the tourist using his mobile device, is first processed to recognize and select the text portion therein that can serve as inquiry text. This may be realized by segmenting the still or moving images and selecting the relevant segment. The segmentation may be performed automatically or may rely on input from the user. The user may for instance draw a frame on the image that contains the text portion. Manual assistance in the segmentation may reduce the mistakes that could occur.

As further defined by claim 3, the image or video generation means in the system for generating touristic information according to the current invention, may comprise a photo camera and/or video camera integrated in a terminal device of the user.

Indeed, the still or moving image may be captured using the photo camera or video camera in the tourist's mobile device. Processing the image or video to select a relevant text segment and recognizing the text through OCR may then be executed in the mobile device or as a service in the network. Processing the image or video in the mobile device requires appropriate software and processing capacity in the mobile device, as well as update and maintenance of this software. Processing the image or video in the network has the advantage of being independent of the hardware and software status of the mobile device, but requires network connectivity with sufficient bandwidth to enable fast and efficient upload of the image or video file.

As further defined by claim 4, the automated search means in the system for generating touristic information according to the present invention may comprise a web-based search engine.

Indeed, preferred embodiments of the present invention make use of web-based search engines to collect meaningful and structured information related to the inquiry text in the foreign language. The web-based search tools typically order the information based on relevancy, hence increasing the meaningfulness of the returned information.

As further specified by claim 5, the automated translation means in the system for generating touristic information according to the present invention may comprise a web-based service for automated translation.

Thus, also the automated translation may be executed using a web-based translation tool. An advantage thereof is that the entire system can be automated with no or minimal impact on the processing requirements of the tourist's mobile device.

According to an optional aspect defined by claim 6, the system for generating touristic information according to the current invention may further comprise:
- means for selecting a portion of the touristic information for automated translation.

Indeed, in case an extensive amount of search results is returned by the search tool, only a limited amount of the information may be selected for translation by the automated translation tool. Thereto, the system according to the invention may comprise means that automatically structure the information based on a classification technique, and select the relevant information while discarding irrelevant or duplicated information. This way, it is avoided that the automated translation tools gets overloaded and the return time of information to the tourists becomes unacceptably long.

In addition to a method for generating touristic information as defined by claim 1, the present invention also concerns a corresponding method for generating touristic information for a user, the user having a first language, the method being defined by claim 7 and comprising:
- generating an image or video;
- processing the image or video to thereby produce a text image;
- generating a text message from the text image through optical character recognition, the text message having a second language different from the first language;
- automatically searching touristic information in the second language related to the text message;
- automatically translating the touristic information from the second language to the first language to thereby generate translated touristic information; and
- providing the translated touristic information in the first language to the user.

Further, the present invention relates to a mobile device for use in a system according to the present invention, the mobile device being defined by claim 8 and comprising:
- image or video generation means enabling the user to generate an image or video containing a text image, the text message having a second language different from the first language;
- an interface to tourism assistance means for receiving translated touristic information related to the text message, automatically searched in the second language and automatically translated from the second language to the first language.

### Brief Description of the Drawing(s)

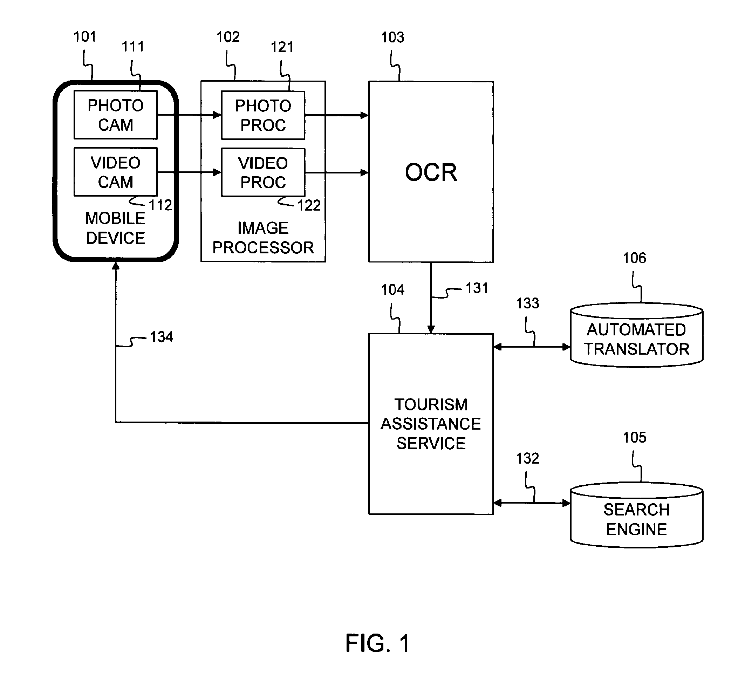

Fig. 1 shows the architecture of a preferred embodiment of the system for generating touristic information according to the present invention.

### Detailed Description of Embodiment(s)

The invention provides a solution for end-users offering more meaningful tourism information. It enables the tourist to understand touristic information in foreign languages.

Basically, the invention provides a system with web services that are capable of recognizing text in a foreign language from an image, i.e. a photo/still image or a video/moving image, searching relevant information based on the recognized text in the foreign language, interpreting the search results into a user's native language, and displaying the information on the user's mobile device. An important aspect of the invention is that it does not translate the inquiry text. Alternately, the inquiry text is used as search key for information in its source language. This information is structured into a meaningful formation, eventually filtered, and then translated into the destination language, i.e. the user's native or preferred language, before being delivered to the user.

The system architecture of an embodiment of the invention is drawn in Fig. 1. The input sources can be a photo or a video registered by a photo camera 111 or video camera 112 in the tourist's mobile device 101, e.g. a smartphone or tablet PC. The photo or image is supposed to contain the inquiry text. With a photo processor 121 or video processor 122 applying image processing techniques such as text tracking, text segmentation, image stitching, etc., the background noise is eliminated and the captured image can be segmented in order to obtain a compact image which mainly contains the inquiry text. This compact image is sent to an optical character recognition or OCR component 103 in order to recognize the inquiry text, thereby transferring the compact image into text 131. The recognized text 131 then acts as the input for the tourism assistance service 104, e.g. a web service or an app installed on the user's mobile device. This service module 104 first uses a search engine 105 to query the input text 131 in its original (foreign) language over the Internet, as is indicated by arrow 132 in Fig. 1. After receiving the search results, the service module 104 may discard irrelevant information using a classification technique and then may structure the selected results. These selected results, in their original language, are thereafter translated into the destination language, i.e. the tourist's language, with the help of an automatic language translator 106. This is indicated by arrow 133 in Fig. 1. At last, the translation 134 of the selected tourist information is sent back to the mobile device 134 by the tourism assistance service 104, providing the meaningful information for display to the user.

As an example, an English speaking tourist who does not know Japanese is travelling in Japan. When he arrives at a restaurant whose name is shown in Japanese, he may want to know how good the cuisine of the restaurant is and how people rate it. Apparently, entering the Japanese name of the restaurant for look-up in a Japanese-English dictionary does not help him. But with the camera embedded in his mobile device, the tourist could take a photo of the name of the restaurant. The text is segmented from the background and used to inquire a search engine based on the Japanese name of the restaurant. The position of the tourist could also be communicated to the search engine in case the tourist's mobile device is equipped with a GPS receiver or other positioning device. Information on the position or location of the tourist may help the service, for instance in selecting relevant and discarding irrelevant information returned by the search engine, or in prioritizing the order wherein search results will be presented to the tourist. Different restaurants in different Japanese cities may have the same name. In such case the location of the tourist may be helpful to the tourism assistance service to distinguish relevant hits. The output of the search engine, which is in Japanese, is thereafter automatically translated into English. The translated info is sent to the tourist's mobile device enabling the tourist to choose the most relevant content on the restaurant in English.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for generating touristic information for a user, said user having a first language, said system comprising:
- image or video generation means (111, 112) enabling said user to generate an image or video;
- image processing means (102) for processing said image or video to thereby produce a text image;
- optical character recognition means (103) adapted to generate a text message (131) from said text image, said text message (131) having a second language different from said first language;
- automated search means (105) for automatically searching touristic information in said second language related to said text message (131);
- automated translation means (106) for automatically translating said touristic information from said second language to said first language to thereby generate translated touristic information; and
- tourism assistance means (104) for providing said translated touristic information (134) in said first language to said user.

2. A system for generating touristic information according to claim 1,
wherein said image processing means (102) comprise segmentation means adapted to segment said image or video and to select a segment of said image or video containing said text message to become said text image.

3. A system for generating touristic information according to claim 1,
wherein said image or video generation means comprise a photo camera (111) and/or video camera (112) integrated in a terminal device (101) of said user.

4. A system for generating touristic information according to claim 1,
wherein said automated search means (105) comprise a web-based search engine.

5. A system for generating touristic information according to claim 1,
wherein said automated translation means (106) comprise a web-based service for automated translation.

6. A system for generating touristic information according to claim 1, further comprising:
- means for selecting a portion of said touristic information for automated translation.

7. A method for generating touristic information for a user, the user having a first language, said method comprising:
- generating an image or video;
- processing said image or video to thereby produce a text image;
- generating a text message (131) from said text image through optical character recognition, said text message having a second language different from the first language;
- automatically searching touristic information in said second language related to said text message (131);
- automatically translating said touristic information from said second language to said first language to thereby generate translated touristic information; and
- providing said translated touristic information (134) in said first language to said user.

8. A mobile device for use in a system for generating touristic information for a user as defined by claim 1, said user having a first language, said mobile device comprising:
- image or video generation means (111, 112) enabling said user to generate an image or video containing a text image, said text message having a second language different from the first language;
- an interface to tourism assistance means (104) for receiving translated touristic information (134) related to said text message, automatically searched in said second language and automatically translated from said second language to said first language.
